# EUROPEAN PATENT SPECIFICATION

(11) **EP 2 389 795 B1**
(45) Date of publication and mention of the grant of the patent: **30.01.2013**
(21) Application number: 11167759.7
(22) Date of filing: 26.05.2011
(51) Int. Cl.: A01C 23/00

(54) **Drip-stop system for liquid fertiliser application equipment**
Antitropfsystem für eine Gülleausbringvorrichtung
Système antigoutte pour un appareil de distribution d'engrais liquide

(30) Priority: 26.05.2010 DK 201000462
(43) Date of publication of application: 30.11.2011
(73) Proprietor: Samson Agro A/S, 8800 Viborg (DK)
(72) Inventor: Due, Robert, Bager, 8800 Viborg (DK)
(74) Representative: Nielsen, Leif

(56) References cited:
- DE-U1- 20 118 071
- DE-U1- 20 217 464
- FR-A1- 2 557 663
- GB-A- 986 509
- GB-A- 1 179 539
- US-A- 1 442 204
- US-A- 2 950 737
- US-A- 3 372 842
- US-A- 3 905 523

## Description

### Field of the Invention

The present invention concerns a drip stop system for liquid manure application equipment such as drag hose booms, incorporators etc., the drip stop system including a duct for the passage of liquid manure, a valve with an inlet and an outlet, the valve capable of shutting off the duct for passage of liquid manure between the inlet and the outlet, and a actuation unit connected with and arranged to open or close the valve.

### Background of the Invention

Liquid manure application equipment, like drag hose booms, incorporators etc., are prior art. These are usually provided with hoses for passage of the liquid manure. The hoses has passage with uniform cross-section from the inlet of the hose to the outlet of the hose. When hoses have a curved shape or a bend, a reduction of the cross-sectional area appears, increasing the risk of materials getting stuck and the duct through the hose is clogged. Material getting stuck and partial clogging of the duct give rise to functional failure and to liquid manure stemmed in the duct slowly dripping out at an unwanted time.

As liquid manure is an inhomogeneous substance that may contain many foreign bodies of different size and possibly irregular shape, there is a risk that such foreign bodies produce clogging. Though liquid manure application equipment includes precipitators for foreign bodies, a part of the latter will be carried with the liquid manure flow through hoses and pipes to valves which are typically disposed close to outlet openings for the liquid manure.

In these hoses there are shut-off valves in the form of squeeze valves. Squeeze valves may in some cases reduce the cross-sectional area even in open condition. This may e.g. occur when the hose does not return 100% to the original shape after some time in use. But a particular problem arises when a squeeze valve is closed. A gradual reduction of the cross-sectional area through the valve occurs hereby and the risk of sticking is increased. Moreover, the squeeze action will contribute to retain the material in the part of the duct opposite the valve body/squeeze device. Insufficient closure occurs hereby, and unwanted dripping from the duct in question takes place.

An example of prior art systems is found in EP 339 008. Herein is described a system of the type mentioned in the introduction where instead of squeeze valves there are used membrane valves. These, however, are associated with the same disadvantages as the above mentioned squeeze valves. Particularly during closing of the membrane there will be a risk of clogging due to material which is stuck giving rise to a leaking valve and consequent unwanted dripping.

A system according to the preamble of claim 1 is known from US-A-1 442 204, while from US-A-3 905 523 is known a system with a rotary valve whereby the cross-sectional area of the outlet is greater than that of the valve body duct, but the area of the duct is smaller than that of the inlet.

### Object of the Invention

The object is to indicate a drip stop system for liquid manure application equipment, like drag hose booms, incorporators etc., where the drip stop system is designed such that the clogging risk is removed.

### Description of the Invention

According to the present invention this object is achieved by a system of the type mentioned in the introduction, which is peculiar in that that the valve is a slide valve or a rotary valve in the form of a valve housing with a displaceable or rotatable valve body having a valve body duct for opening the duct and a valve body surface for shutting off the duct for liquid manure passage through the valve housing, that the valve body duct has a cross-sectional area which is greater than the area of the inlet, that the outlet has a cross-sectional area which is greater than the cross-sectional area of the valve body duct, that the actuation unit is connected with and arranged for moving the valve body between a position where the valve is open and a position where the valve is closed.

Due to the area of the duct for the liquid manure flow becoming larger through the system/valve, this drip stop system will safeguard that the system does not become clogged. Possible material that may get stuck in the valve body by closing traditional squeeze valves will when closing a valve body in the valve be cut or squeezed through by displacement or rotation of the valve body. The edges at the transition between valve body duct and inlet and outlet, respectively, may function as interacting edges cutting through the material so that the valve is safely closed when the shut-off surface of the valve body is aligned with the duct for liquid manure passage through the drip stop system. After reopening, possible material in the valve body duct may pass out of the valve.

The valve may be provided in a duct consisting of a flexible hose or in a duct formed of dimensionally stable metal pipes. The valve will typically be disposed close to outlet apertures or incorporator equipment for the liquid manure. The invention is particularly advantageous by incorporator equipment where the last part of the liquid manure duct is constituted of metal pipes mounted on a frame which ensures that the outlet openings are pressed down into the soil in order to ensure application of the liquid manure below the ground surface. Here, the valve can be mounted on the frame.

According to a further embodiment, the invention is peculiar in that the inlet is made as a top plate on the valve housing and with an inlet connection for coupling to a liquid manure hose. The valve may hereby constitute a connection between a flexible liquid manure hose from the liquid manure tank and metal pipes for incorporator equipment which can be connected with a frame in order to ensure application under the ground surface.

According to a further embodiment, the invention is peculiar in that the valve housing is made as a two-part housing with a top plate and a bottom plate between which space is provided for the valve body and sealing elements. This is a particularly simple design of the valve. With few elements, the risk to joints and thereby risk of leaks and leakage are reduced.

According to a further embodiment, the invention is peculiar in that the outlet in the valve housing is connected with one to five separate outlets. Thereby, distribution of the liquid manure from a duct from a liquid manure tank to the valve and further to several outlets can be performed such that the spacing between juxtaposed outlet openings can be reduced.

According to a further embodiment, the invention is peculiar in that the outlet in the valve housing continues into two separate outlets. This has appeared an advantageous disposition which can be provided in a technically simple way. In practice, this is effected in that a U-shaped pipe via a flange is connected with the outlet of the valve. By this design it is to be ensured that the distance from the outlet to an opposite wall in the U-shaped pipe is greater than the diameter of a round outlet from the valve. Hereby narrowing is avoided which may cause clogging at the transition to two pipes leading to the separate outlet openings.

According to a further embodiment, the invention is peculiar in that the actuation unit is a double-acting hydraulic cylinder which via a hydraulic pressure displaces the valve body between the positions of open or closed valve, respectively. As slurry tankers/tractors use hydraulics, this hydraulic system is advantageously used for driving the valve body. As double acting cylinders are used, it is particularly ensured that the valve body is brought from fully open to fully closed position, and vice versa. Alternatively, single-acting cylinders with a strong return spring for returning the piston can be applied.

According to a further embodiment, the invention is peculiar in that by closed valve, the piston rod of the hydraulic cylinder is entirely retracted into the cylinder in order to be protected against damage and corrosion. Operational reliability and thereby also the certainty of achieving correct closing of the vale is hereby increased.

According to a further embodiment, the invention is peculiar in that the area of the valve body duct becomes greater through the valve body, having approximately the shape of a truncated cone. This is a particularly simple design of the valve body for ensuring an evenly and smoothly increased cross-sectional area through the valve, providing further space for passage through the conical valve passage.

According to a further embodiment, the invention is peculiar in that the valve is a gate valve and that the valve body is a sliding gate. Hereby it is particularly well ensured that the valve will close as the gate can cut through material located in the valve. The gate is particularly efficient if it has an edge which is tapering for formation of a cutting edge.

According to a further embodiment, the invention is peculiar in that one actuation unit is connected with several valves for simultaneous opening and closing the valves. This is enables a technically simple solution. This design is particularly usable when several valves are connected with one frame. The cylinder may here be fastened with a rod connection to each valve body. Alternatively, a plate constituting the gate can be used for a plurality of juxtaposed gate valves and which is displaced between frame parts constituting top and/or bottom plates for juxtaposed valve housings in the same frame. Several frames can be juxtaposed in order to provide a desired working width for the liquid manure application equipment.

In a particular embodiment, the frame may constitute a top plate for several valve housings, and each valve then has a separate detachable bottom plate connected with one to five outlet pipes, preferably two outlet pipes. The separate bottom plates for each valve housing can be pivotably connected with the top plate. Access to the interior of the pipe leading from the valve housing to the outlet openings is hereby ensured.

### Description of the Drawing

The invention will be explained in more detail below with reference to the accompanying drawing, where:
- Figs. 1-3: show different views of a first embodiment of a liquid manure application equipment with drip stop system according to the invention;
- Figs. 4-7: show different sectional views through the liquid manure application equipment shown in Figs. 1-3;
- Figs. 8-14: show different views of a second embodiment of the invention;
- Fig. 15: shows a perspective view of a liquid manure application equipment provided in a frame with several juxtaposed drip stop systems according to the invention.

### Detailed Description of Embodiments of the Invention

There is described various embodiments of a drip stop system according to the invention. In the various Figures of the drawing, identical or corresponding elements are denoted with the same reference number, and no specific explanation will therefore be given in connection with each Figure.

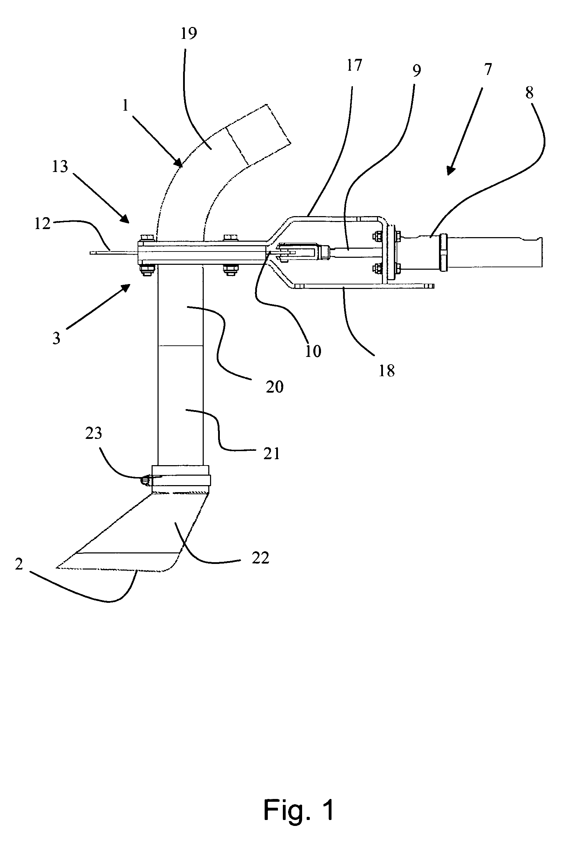

Fig. 1 shows a drip stop system in which is provided a duct 1 for the passage of liquid manure between a tank (not shown) and an outlet opening 2 for the liquid manure. The system includes a valve 3 with an inlet 4 and an outlet 5, and a gate duct 6 for passage of the liquid manure between the inlet 4 and the outlet 5.

The system includes an actuation unit 7 in the form of a double-acting cylinder 8 where a cylinder rod 9 is connected with a plate constituting a valve body in the form of a gate 10. It appears that the gate 10 has a gate valve 11 that enables opening of the valve when it is aligned with the inlet 4 and the outlet 5, and a gate surface 12 intended for shutting off part of the duct 1 for passage of the liquid manure through the valve housing 13 of the valve 3.

The valve housing 13 is formed by a top plate 14 and a bottom plate 15 which are disposed at each side of the gate 10 with sealings 16 disposed between the top plate and the bottom plate, respectively.

The top plate and the bottom plate 14, 15 are clamped together between a first and a second support holder plate 17, 18 which are extended beyond the valve housing 3 for forming a support holder on which the cylinder 8 is mounted.

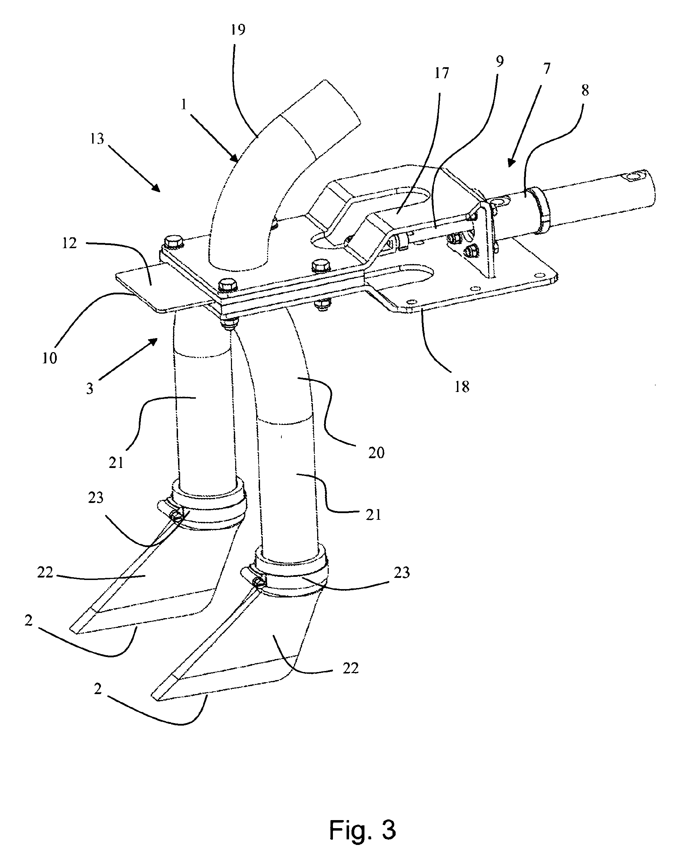

In Figs. 1 and 3, the valve 3 appears in an open position with the gate duct 6 aligned with the inlet and the outlet 4, 5. It appears that the cylinder 8 is here in extended position with the cylinder rod 9 extended. When closing happens, it occurs that the cylinder rod 9 is retracted entirely into the cylinder 8 and is located protected therein. At the same time, the gate surface 12 will be aligned with the inlet and outlet 4, 5 for closing the passage through the valve 3.

In the shown design, the first support holder plate 18 is connected with an inlet connection 19. The inlet connection 19 could be directly connected with the top plate 14 in the valve housing 13.

The inlet connection 19 is intended for coupling to a slurry hose to a liquid manure tank (not shown).

At the support holder plate 18, the valve 3 is connected with a U-shaped pipe 20 which is connected with two vertical pipes 21. At their lower ends the pipes 21 have outlet openings 2 in flexible shares 22 which via hose clamps 23 are connected with the lower end of the pipes 21.

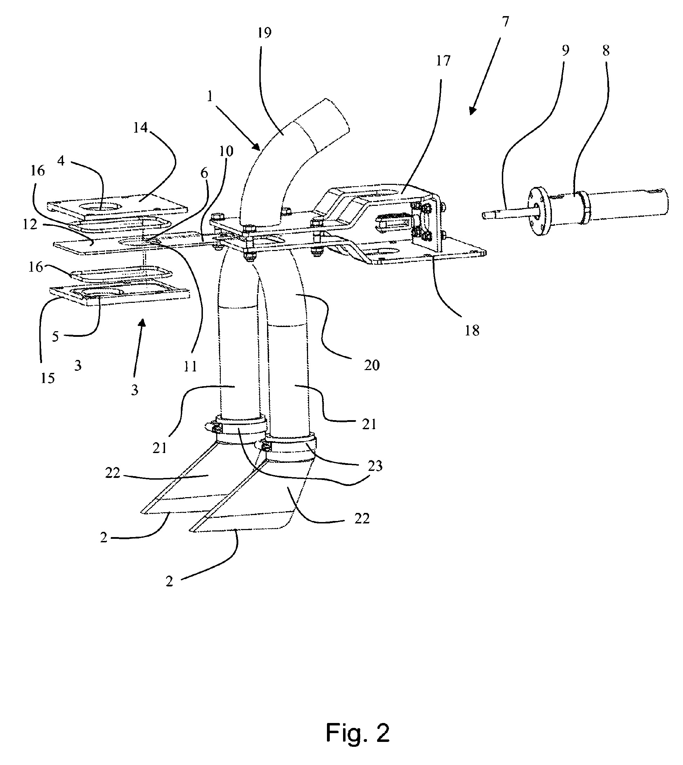

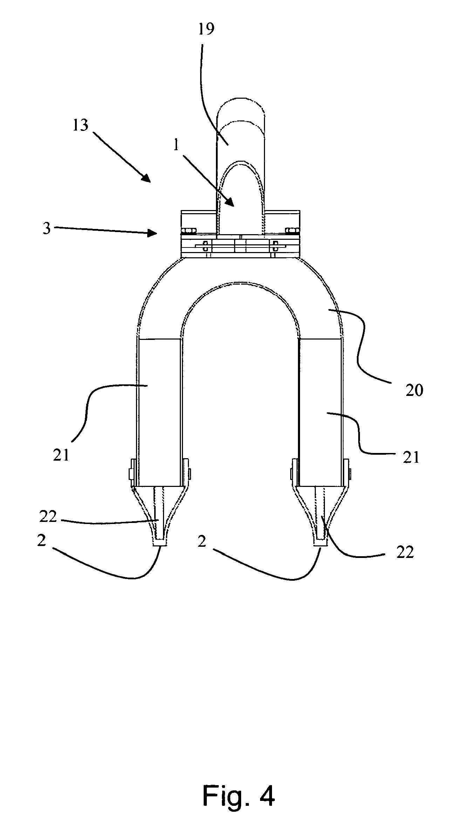

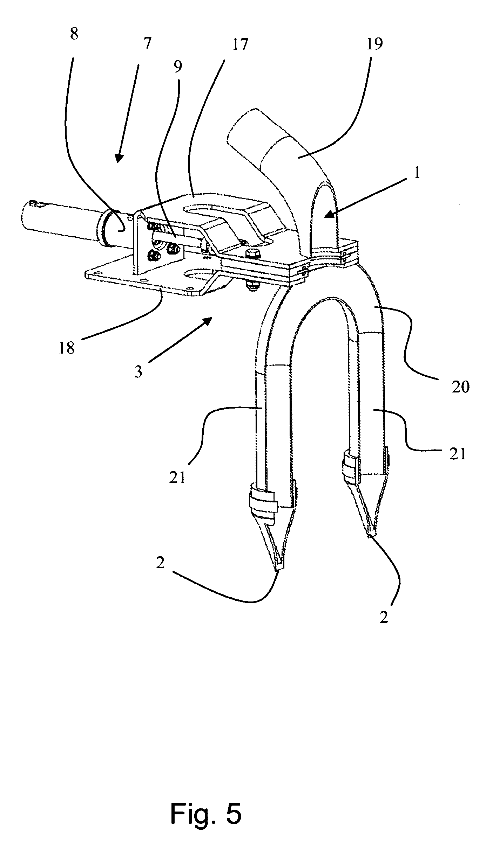

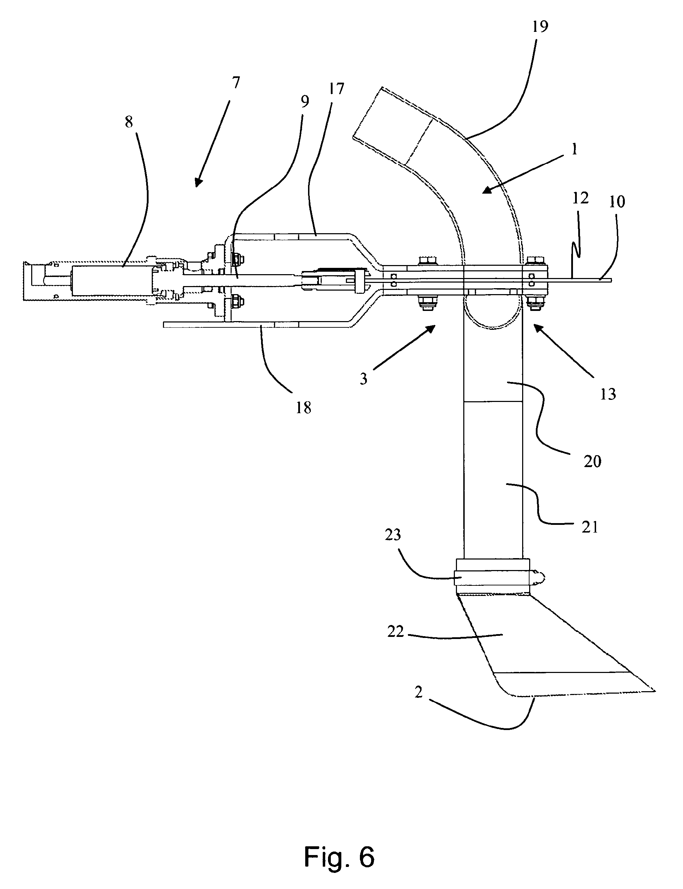

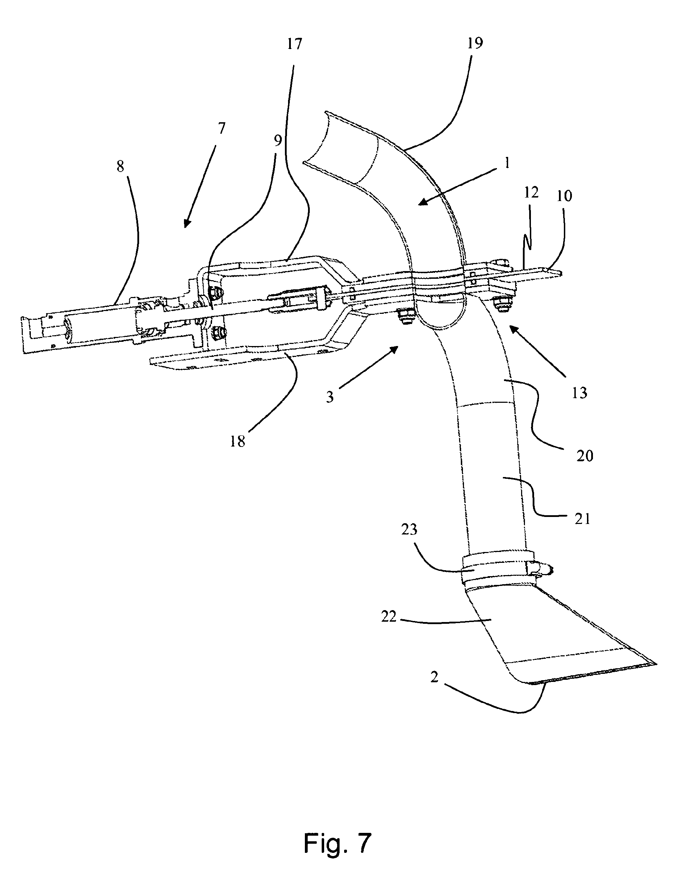

Figs. 4-7 show partial sectional views through the embodiment of the drip stop system shown in Figs. 1-3. It is noted here that duct 1 is designed with a largely circular cross-section. The circular cross-section through the inlet connection 19 has a smaller area than the inlet opening 4. The inlet opening 4 has slightly smaller cross-sectional area than the cross-sectional area for passage 6 through the gate 10, and the cross-sectional area at the outlet 5 is also slightly larger than the cross-sectional area through the gate duct 6. After the outlet 5, the U-shaped pipe 20 will divide the liquid manure flow into two partial flows through each of the two pipes 21, respectively. Even though it does not appear clearly on the Figures, the duct through the valve body and inlet/outlet appear with the shape of a truncated cone.

As shown in Figs. 1-7, the valve 3 is provided with the shape of a gate valve 11 with a sliding gate 6.

As alternative to the sliding gate valve 11 shown in Fig. 1, instead of the gate 3 there will be disposed a ball valve with rotatable ball valve body which enables closing and opening of the passage by rotating a ball valve body which has a through passage with a diameter corresponding to the valve requiring a higher housing and a lever arm which is connected with the cylinder for establishing the rotation of the ball valve body between open and closed positions.

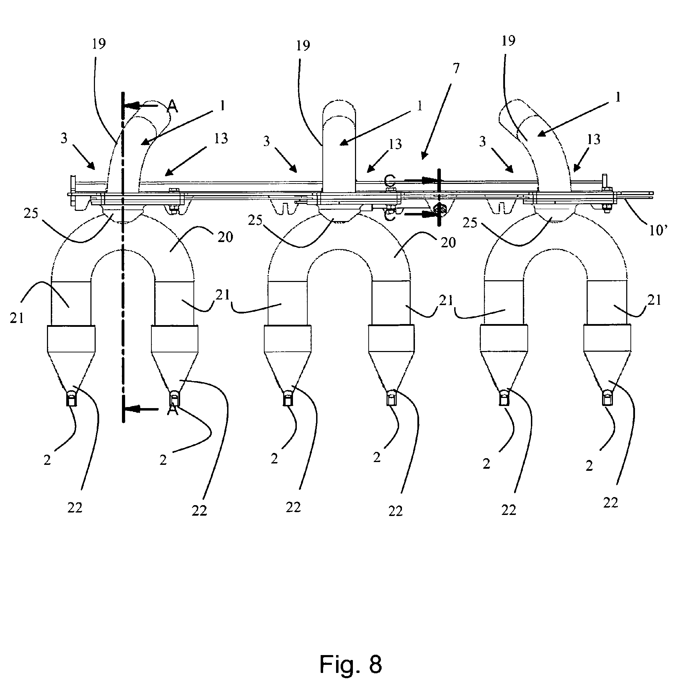

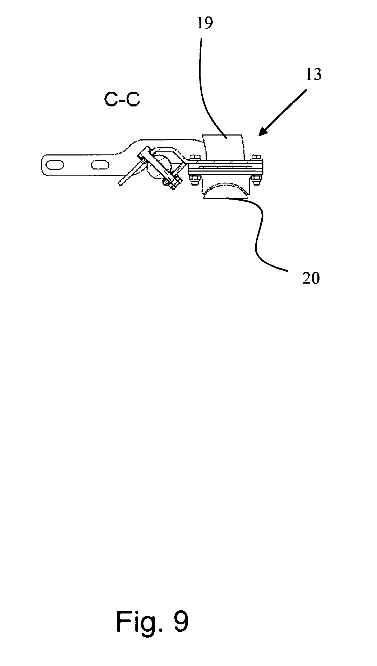

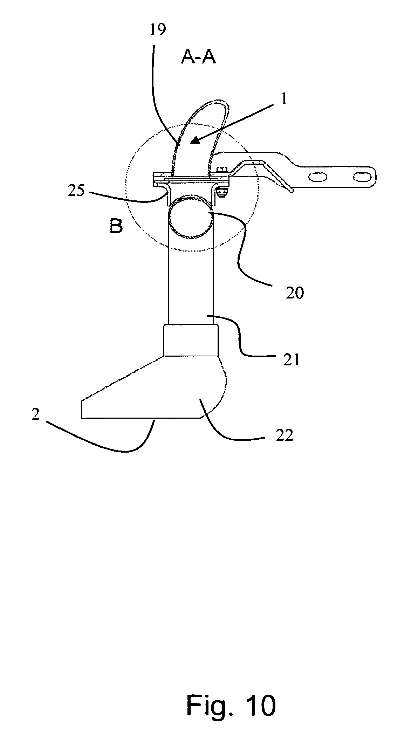

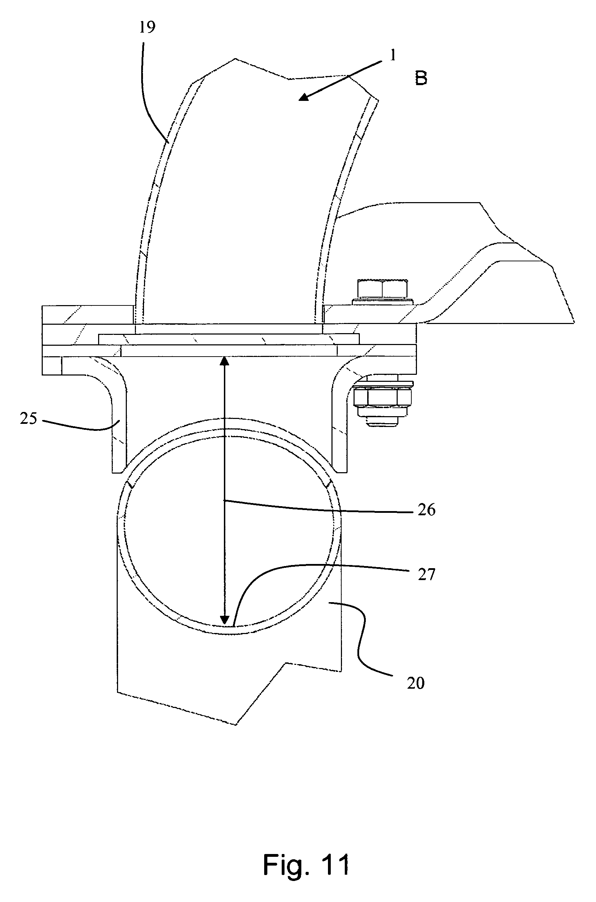

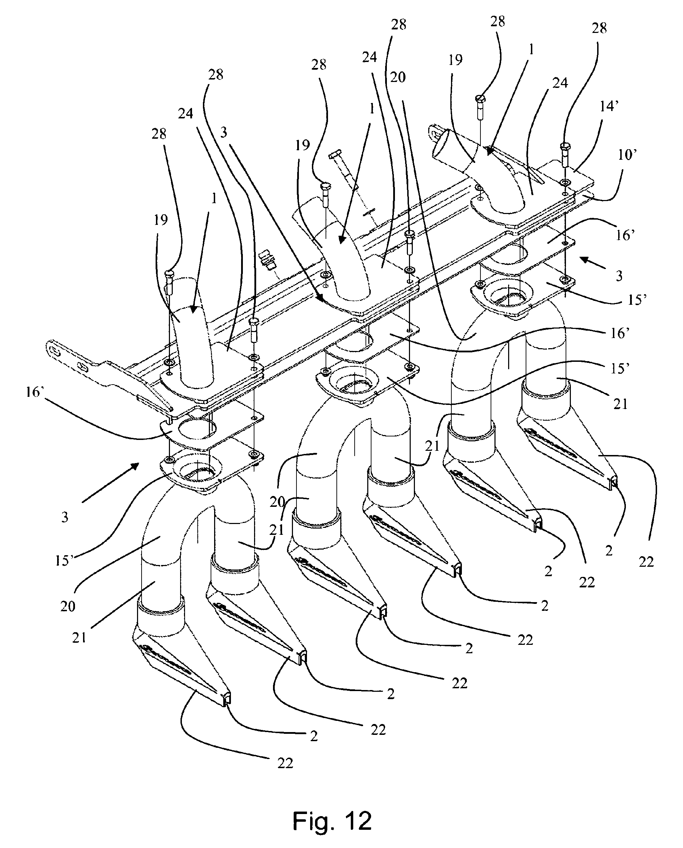

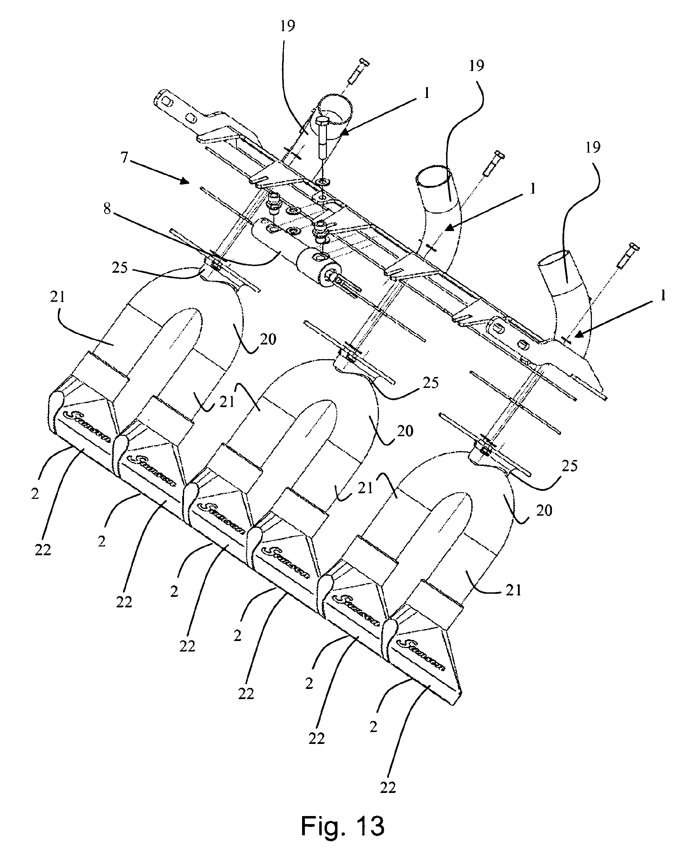

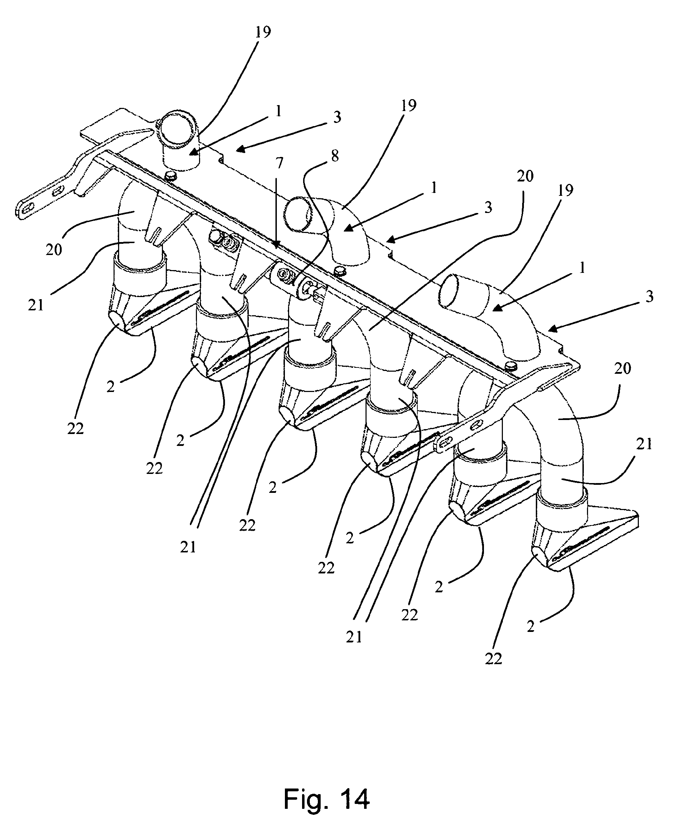

Figs. 8-14 show an alternative embodiment where the gate valves are provided in a different way. Here is provided a top plate 14' in the form of a common plate 14'. Three separate bottom plates 15' are provided and screwed on to the top plate 14' with sealing elements 16' disposed between the gate and the top plate/bottom plates. A common gate 10' is displaced past the juxtaposed valves 3 by means of the double-acting hydraulic cylinder 8. As alternative to a common gate 10', three separate gates can be used which are displaced via rod connections by a double-acting hydraulic cylinder 8.

In this embodiment, it appears that the inlet connections 19 are connected to the top plate 14' via support holder plates 24.

Moreover, it appears that the bottom plates 15' are connected with the U-shaped pipes 20 via flanges 25. A greater distance 26 is provided hereby between the outlet 5 from the valve body to the opposite edge 27 at the bottom of the U-shaped pipe 20. When this distance is greater than the diameter of the outlet 5, a substantial increase of the cross-sectional area is attained at outlet of the valve 3. This is particularly important as a division of the liquid manure flow into the two partial flows through the pipes 21 takes place. On Figs. 8-14 it appears that each of the inlet connections 9 are oriented with different angles in relation to the longitudinal direction of the top plate 14'. Alternatively, each of the inlet connections 19 can be directed perpendicularly to the longitudinal direction of the top plate 14 such as is the case with the middle inlet connection 19. Hereby is ensured a uniform flow through the valve and thereby a uniform distribution of the liquid manure flow in the two pipes 21.

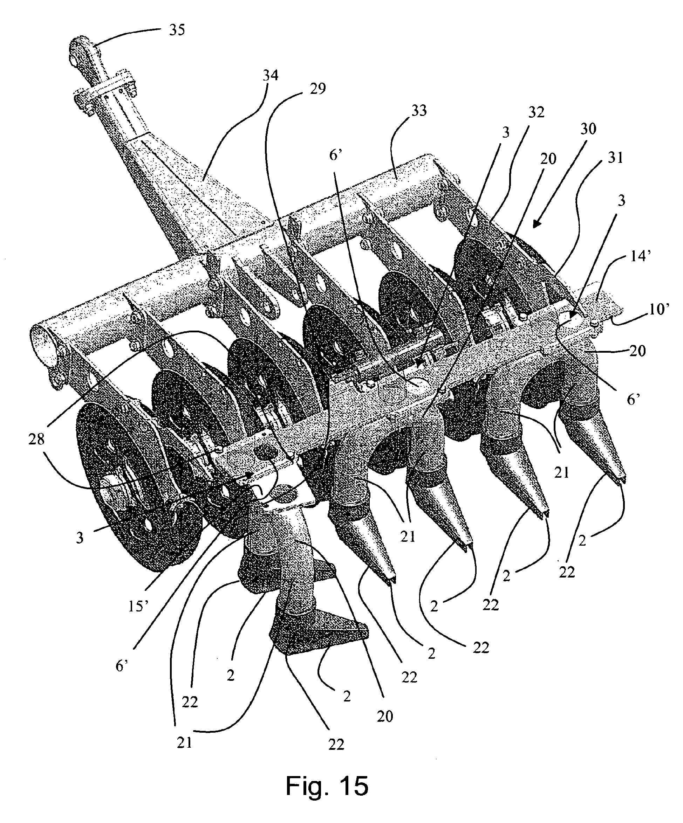

Fig. 15 shows a perspective view of a liquid manure application equipment designed in accordance with Figures 8-14. It clearly appears here that each of the bottom plates 15' are pivotably connected to the top plate 14'. Each of the bottom plates 15' are fastened to the top plate 14' by means of two screws 28. One of the screws 28 are mounted on the bottom plate 15' via a cutout 29. Hereby, after loosening the screws 28, a pivoting of the bottom plate 15' can occur about the screw 28 which is shown to the right, passing through a boring in the bottom plate 15'. The bottom plate 15' may hereby be pivoted to a free position for inspection and possible cleaning, as shown to the left on Fig. 15. It appears that the top plate 14' constitutes part of a frame 30 as it is connected with frame parts 32 via an arm 31. The frame parts 32 are connected with a crossbar 33 which in turn is connected with a drawbar 34 serving as connection of incorporator equipment to a slurry tanker. This is effected by a ball joint 35 which ensures free pivoting of the application equipment across unevenesses on the ground. The frame 30 is connected with a slurry tanker via hydraulic cylinders which press the frame and thereby the liquid manure application equipment into contact with the ground.

Disc cutters 36 are provided on the frame, cutting a groove which ensures that liquid manure openings 2 will ensure application of the liquid manure under the ground surface (not shown).

In Fig. 15, top plate 14 is shown transparent such that the displaceable gate 10' with the gate ducts 6' provided for each valve is seen as well.

## Claims

1. A drip stop system for liquid manure application equipment such as drag hose booms, incorporators etc., the drip stop system including a duct (1) for the passage of liquid manure, a valve (3) with an inlet (4) and an outlet (5), the valve capable of shutting off the duct for passage of liquid manure between the inlet and the outlet, and an actuation unit (7) connected with and arranged to open or close the valve, wherein the valve is a slide valve or a rotary valve in the form of a valve housing (13) with a displaceable (10) or rotatable valve body having a valve body duct (6) for opening the duct (1) and a valve body surface (12) for shutting off the duct (1) for liquid manure passage through the valve housing, and the actuation unit is connected with and arranged for moving the valve body between a position where the valve is open and a position where the valve is closed, **characterised in that** the valve body duct (6) has a cross-sectional area which is greater than the area of the inlet, and the outlet has a cross-sectional area which is greater than the cross-sectional area of the valve body duct.

2. Drip stop system according to claim 1, **characterised in that** the inlet is made as a top plate (14) on the valve housing (13) and with an inlet connection for coupling to a liquid manure hose.

3. Drip stop system according to claim 1 or 2, **characterised in that** the valve housing is made as a two-part housing with a top plate (14) and a bottom plate (15) between which space is provided for the valve body (10) and sealing elements (16).

4. Drip stop system according to claim 1, 2 or 3, **characterised in that** the outlet in the valve housing (13) is connected with 1 - 5 separate outlets (2).

5. Drip stop system according to claim 4, **characterised in that** the outlet (5) in the valve housing continues into two separate outlets (2).

6. Drip stop system according to any preceding claim, **characterised in that** the actuation unit (7) is a double-acting hydraulic cylinder (8) which via a hydraulic pressure displaces the valve body (10) between the positions of open or closed valve, respectively.

7. Drip stop system according to claim 6, **characterised in that** by closed valve, the piston rod (9) of the hydraulic cylinder (8) is entirely retracted into the cylinder in order to be protected against damage and corrosion.

8. Drip stop system according to any preceding claim, **characterised in that** the area of the valve body duct (6) becomes greater through the valve body, having approximately the shape of a truncated cone.

9. Drip stop system according to any preceding claim, **characterised in that** the valve (3) is a gate valve and that the valve body is a sliding gate (10).

10. Drip stop system according to any preceding claim, **characterised in that** one actuation unit (7) is connected with several valves (3) for simultaneous opening and closing the valves.

## Patentansprüche

1. Antitropfsystem für eine Flüssigdüngerausbringvorrichtung, wie z.B. Schleppschlauchausleger, Einarbeitungsgeräte od.dgl., wobei das Antitropfsystem ein Rohr (1) zum Flüssigdüngerdurchlauf, ein Ventil (3) mit einem Einlauf (4) und einem Auslauf (5), wobei das Ventil zum Schließen des Flüssigdüngerdurchlaufrohrs zwischen Einlauf und Auslauf fähig ist, sowie eine mit dem Ventil verbundene und für das Öffnen und Schließen des Ventils vorgesehene Betätigungseinheit (7) aufweist, wobei das Ventil ein Schieberventil oder ein Drehventil ist in der Form von einem Ventilgehäuse (13) mit einem versciebbaren (10) oder drehbaren Ventilkörper mit einem Ventilkörperkanal (6) zum Öffnen des Rohrs (1) und eine Ventilkörperfläche (12) zum Schließen des Rohrs (1) gegen Flüssigdüngerdurchlauf durch das Ventilgehäuse, und die Betätigungseinheit ist mit dem Ventilkörper verbunden und ist zum Verschieben davon zwischen einer Position, worin das Ventil offen ist, und einer Position, worin das Ventil geschlossen ist, vorgesehen, **dadurch gekennzeichnet, dass** der Ventilkörperkanal (6) eine Querschnittsfläche aufweist, die größer als die Einlauffläche ist, und dass der Auslauf eine Querschnittsfläche aufweist, die größer als die des Ventilkörperkanal ist.

2. Antitropfsystem nach Anspruch 1 oder 2, **dadurch gekennzeichnet, dass** der Einlauf als eine Oberplatte (14) auf dem Ventilgehäuse (13) gestaltet ist und weist eine Einlaufverbindung zum Verknüpfen mit einem Flüssigdüngerschlauch auf.

3. Antitropfsystem nach Anspruch 1 oder 2, **dadurch gekennzeichnet, dass** das Ventilgehäuse als zweiteiliges Gehäuse mit einer Oberplatte (14) und einer Unterplatte (15) gestaltet ist, zwischen denen ein Raum für den Ventilkörper (10) und die Dichtungselemente (16) vorgesehen ist.

4. Antitropfsystem nach Anspruch 1, 2 oder 3, **dadurch gekennzeichnet, dass** der Auslauf in das Ventilgehäuse (13) mit 1 - 5 getrennten Ausläufen (2) verbunden ist.

5. Antitropfsystem nach Anspruch 4, **dadurch gekennzeichnet, dass** der Auslauf (5) im Ventilgehaüse in zwei getrennte Ausläufe (2) mündet.

6. Antitropfsystem nach irgendeinem der vorgehenden Ansprüche, **dadurch gekennzeichnet, dass** die Betätigungseinheit (7) ein doppeltwirkender hydraulischer Zylinder (8) ist, der durch einen hydraulischen Druck den Ventilkörper (10) zwischen die Öffnen- und Schließpositionen des Ventils verschiebt.

7. Antitropfsystem nach Anspruch 6, **dadurch gekennzeichnet, dass** bei geschlossenem Ventil die Kolbenstange (9) des hydraulischen Zylinders (8) zum Schutz gegen Beschädigung und Korrosion in den Zylinder ganz zurückgezogen ist.

8. Antitropfsystem nach irgendeinem der vorhergehenden Ansprüche, **dadurch gekennzeichnet, dass** die Fläche des Ventilkörperkanals (6) durch den annähernd eine Kegelstumpfform aufweisenden Ventilkörper hindurch größer wird.

9. Antitropfsystem nach irgendeinem der vorhergehenden Ansprüche, **dadurch gekennzeichnet, dass** das Ventil (3) ein Absperrschieber ist, und dass der Ventilkörper ein Schiebetor (10) ist.

10. Antitropfsystem nach irgendeinem der vorhergehenden Ansprüche, **dadurch gekennzeichnet, dass** eine Betätigungseinheit (7) mit einer Vielzahl von Ventilen (3) zum gleichzeitigen Öffnen und Schließen der Ventile verbunden ist.

## Revendications

1. Système antigoutte pour un appareil de distribution d'engrais liquide, telles que des rampes de tubes traînantes, des fertilisateurs etc., le système antigoutte comprenant un conduit (1) pour le passage d'engrais liquide, une soupape (3) avec une entrée (4) et une sortie (5), la soupape capable de fermer le conduit de passage d'engrais liquide entre l'entrée et la sortie, et une unité d'actionnement (7) reliée à et conçue pour ouvrir ou fermer la soupape, dans lequel la soupape est une soupape à tiroir ou une soupape rotative sous la forme d'un boîtier de soupape (13) avec un corps de soupape rotatif ou déplaçable (10) comportant un conduit de corps de soupape (6) pour ouvrir le conduit (1) et une surface de corps de soupape (12) pour fermer le conduit (1) pour le passage d'engrais liquide à travers le logement de la soupape, et l'unité d'actionnement est reliée à et conçue pour déplacer le corps de soupape entre une position dans laquelle la soupape est ouverte, et une position dans laquelle la soupape est fermée, **caractérisé en ce que** le conduit du corps de soupape (6) présente une section transversale qui est plus grande que la section de l'orifice d'entrée, et l'orifice de sortie présente une section transversale qui est plus grande que la section transversale du conduit du corps de soupape.

2. Système antigoutte selon la revendication 1, **caractérisé en ce que** l'entrée est réalisée sous la forme d'une plaque supérieure (14) sur le boîtier (13) de soupape et avec un raccord d'entrée pour un couplage à un tuyau flexible d'engrais liquide.

3. Système antigoutte selon la revendication 1 ou 2, **caractérisé en ce que** le boîtier de soupape est réalisé comme un boîtier en deux parties avec une plaque supérieure (14) et une plaque inférieure (15) entre lesquelles un espace est prévu pour le corps de soupape (10) et des éléments d'étanchéité (16).

4. Système antigoutte selon la revendication 1, 2 ou 3, **caractérisé en ce que** la sortie dans le boîtier de soupape (13) est reliée à 1-5 sorties séparées (2).

5. Système antigoutte selon la revendication 4, **caractérisé en ce que** la sortie (5) dans le boîtier de soupape se poursuit en deux sorties séparées (2).

6. Système antigoutte selon l'une quelconque des revendications précédentes, **caractérisé en ce que** l'unité d'actionnement (7) est un cylindre hydraulique à double effet qui par l'intermédiaire d'une pression hydraulique déplace le corps de soupape (10) entre les positions de soupape ouverte ou fermé, respectivement.

7. Système antigoutte selon la revendication 6, **caractérisé en ce que** par soupape fermée, la tige de piston (9) du cylindre hydraulique (8) est entièrement rétractée dans le cylindre afin d'être protégée contre des dommages et la corrosion.

8. Système antigoutte selon l'une quelconque des revendications précédentes, **caractérisé en ce que** la surface du conduit du corps de soupape (6) devient plus grande à travers le corps de soupape, ayant approximativement la forme d'un cône tronqué.

9. Système antigoutte selon l'une quelconque des revendications précédentes, **caractérisé en ce que** la soupape (3) est une soupape à tiroir et que le corps de soupape est une porte coulissante (10).

10. Système antigoutte selon l'une quelconque des revendications précédentes, **caractérisé en ce qu'**une unité d'actionnement (7) est reliée à plusieurs soupapes (3) pour l'ouverture et la fermeture simultanées des soupapes.
